Europäisches Patentamt

European Patent Office

Office européen des brevets

(11) Publication number: **0 123 498**

**A2**

# EUROPEAN PATENT APPLICATION

(21) Application number: **84302597.4**

(22) Date of filing: **16.04.84**

(51) Int. Cl.³: **F 24 J 3/02**

(30) Priority: **18.04.83 US 486250**

(43) Date of publication of application:
**31.10.84 Bulletin 84/44**

(84) Designated Contracting States:
**BE DE FR GB IT LU NL**

(71) Applicant: **MEGATECH CORPORATION**
**29 Cook Street**
**Billerica Massachusetts 01866(US)**

(72) Inventor: **Haldeman, Charles W.**
**384 Hayward Mill Road**
**Concord Massachusetts 01742(US)**

(74) Representative: **Brunner, Michael John et al,**
**GILL JENNINGS & EVERY 53-64 Chancery Lane**
**London WC2A 1HN(GB)**

(54) **Wavy tube heat pumping.**

(57) A PVC conduit (24) about 10mm in diameter and a little more than 12m long is adapted to be seated in a hole in the earth and surrounds a coaxial copper tube (22) along its length that carries Freon between a heat pump and a distributor (25) at the bottom. A number of wavy conducting tubes (26, 27) located between the central conducting tube (22) and the wall of the conduit (24) interconnect the distributor (25) with a Freon distributor (33) at the top arranged for connection to the heat pump. The wavy conducting tubing (26, 27) can be made by passing straight soft copper tubing between a pair of like opposed meshing gears (41L & 41U) each having four convex points (42) in space quadrature separated by four convex recesses (43) with the radius of curvature of each convex point (42) slightly less than that of each concave recess (43).

FIG. I

EP 0 123 498 A2

./...

42

41

.531 R TYP ON
2.776 DIA. CIRCLE

43

.526 R TYP ON
2.776 DIA. CIRCLE

.750 REAM

45° TYP

A

B

32

41

44

.50

# FIG. 3A

# FIG.3B

MEGATECH CORPORATION.                        90/2263/02

## WAVY TUBE HEAT PUMPING

The present invention relates in general to geothermal heat transfer and more particularly concerns novel apparatus and techniques for efficiently exchanging heat with the earth to provide both heating and cooling in a cost effective heat pump system that uses wavy tubes for exchanging heat.

The present invention represents an improvement of the invention disclosed in EP-A-0061909.

Prior art of background interest includes the following US Patent Nos: 1,875,305, 2,554,661, 3,848,427, 3,965,694, 4,106,555, 4,224,805, 4,325,228, 4,327,560, 4,328,858, JP-A-55-165434 and 56-53330, and DE-A-29 30 484 and 29 31 485.

A prior invention owned by the applicant takes advantage of ground Freon heat exchangers for use with conventional refrigeration heat pumps for space heating, having the advantage over air heat exchangers that the temperature in the ground is significantly closer to the desired room temperature than the outside air temperature. Ground temperature is typically within the range of 4 to 16$^{\circ}$C (40 to 60$^{\circ}$F) whereas outside air temperatures are typically in the range -17 to 38$^{\circ}$C (0 to 100$^{\circ}$F). As a result, a heat pump operating from ground temperature has a smaller temperature difference to work against and avoids noisy outside air movers or outside water source and drainage systems.

The prior invention maintains continuous fluid contact with ground water in a hole drilled in the earth, which in turn exchanges heat with the earth. A Freon-water heat exchanger is lowered into the upper end of the drilled hole, typically six-inches in diameter. Typically a 12m (40 foot) long heat exchanger is located approximately 6m (20 feet) below ground level or 3m (10 feet) below the natural water level. If the well does not fill naturally, it may be filled from another source. A convective duct below the heat exchanger draws water from the bottom of the well, typically 150m (500 feet) deep for a $17.58 \times 10^3$W (60,000 BTU/hr) heat exchanging system. A motor driven propeller mounted at the top of the heat exchanger helps circulate the ground water. Typically a half-horsepower submersible pump motor drives the propeller to move water at a rate of approximately $6.3 \times 10^{-3}$ $m^3.s^{-1}$ (100 gallons per minute) through the heat exchanger. Typically the structure is long and thin and may comprise eight parallel enhanced-area tubes finned on the inside and knurled on the outside available from Noranda Metal Industries, the Forge-Fin division, Prospect Drive, Newtown, Connecticut.

This prior invention has a number of advantages over conventional water source heat pumps which remove water from the well with a pump under pressures of $3.45 \times 10^5$ to $6.9 \times 10^5$ Pa (50 to 100 pounds per square inch). Power consumption is lower because pressure drop in the hole is only that needed to circulate the water in the hole, typically two to five pounds per square inch. Heat transfer between the earth and heat exchanger are accomplished by the same stream of water, typically about $6.3 \times 10^{-3}$ $m3.s^{-1}$ (100 gallons per minute) without removing water from or returning water to the earth. Piping losses are minimized because Freon is piped only to the top 12m (40 feet) of the well with water at nearly constant pressure carrying the heat to the bottom of the hole.

However, it would be desirable to increase the efficiency of heat exchange.

According to a first aspect of the invention a heat exchanging system having an inlet and an outlet for connection to a heat pump and a conduit surrounding a conducting tube for carrying refrigerant inside the conduit and returning it through thermally conducting tubing in the region between the conducting tube and the conduit, is characterized in that the thermally conducting tubing has a wavy shape.

The tubing may be made on apparatus comprising first and second opposed meshing gears characterized by convex points alternating with concave recesses with the radius of curvature of each convex point being slightly less than the radius of curvature of each concave recess.

The invention includes a method of making thermally conducting wavy tubing which includes the steps of forcing a length of copper tubing between two opposed meshing gears as the gears rotate in synchronism.

The invention also includes thermally conducting tubing for carrying a refrigerant, the conducting tubing being formed of a sequence of waves along its length with the wavelength and amplitude of each wave greater than the diameter of the tubing, for creating eddies in refrigerant moving inside the conducting tubing to enhance the heat transfer between the refrigerant and the conducting tubing.

Other features of the invention will become apparent from the following specification when read in connection with the accompanying drawings in which:-

Fig. 1 shows an improved heat exchanger with wavy tubes according to the invention;

Fig. 2 is a cutaway plan view of a wavy tube according to the invention;

Figs. 3A and 3B show plan and end views, respectively, of a gear for bending soft copper tubing to make the wavy tubing; and

Figs. 4A and 4B are top and front views, respectively, of apparatus for making the wavy tubing.

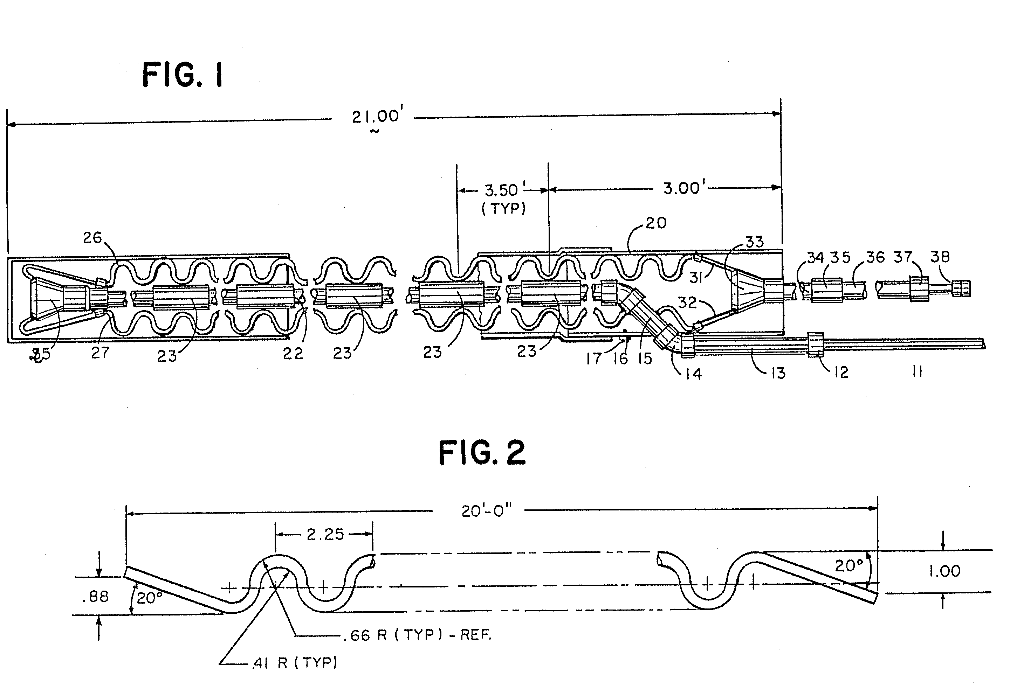

With reference now to the drawings, and more particularly, Fig. 1 thereof, there is shown an embodiment of the invention using wavy tubes for insertion into a hole in the ground. A copper tube 11, typically 12mm x 36mm (1/2" x 14") is used for evacuating and purging the assembly, the heat pump piping being typically 22mm (7/8") diameter or larger for connection to the service heat pump of 17.58 x $10^3$W (60,000 BTU) capacity. This connection is made to copper tube 13, typically 22mm x 30mm (7/8" x 12") coupled by 45$^O$ copper elbow 14 to copper tube 15, typically, 22mm x 9mm (7/8" x 3 1/2") copper tube. Copper tube 15 passes through an opening just above collar strap 16 secured by self-tapping screw 17 into PVC collar 20. Another 45$^O$ elbow 21 couples copper tube 15 to vertical copper tube 22, typically 22mm x 6m (7/8" x 20') surrounded by five copper spacers 23, typically 4mm x 7.5mm (1 5/8" x 3"). Copper tube 22 is coaxial about and inside carlon PVC conduit 24, typically comprising two nesting sections each 10mm x 3m ( 4" x 10'). Tube 22 is connected at the bottom to distributor assembly 25 that receives a number of wavy copper tubes, such as 26 and 27 (there typically being fifteen in an assembly), for carrying Freon, that surround pipe 22 inside conduit 24 and are connected at the top to copper tubes, such as 31 and 32, respectively, in Freon distributor 33. Freon distributor 33 is coupled by a copper tube 34, typically 3mm x 107mm (1 1/8" x 3 1/2'), copper coupler 35, to copper tube 36, typically 3mm x 30mm (1 1/8" x 12"). Modified cap 37 through access valve 38 is connected to Freon tankard guages for refilling with Freon after purging the assembly.

Access valve 38, cap 37 and copper tube 11 are then cut off and tubes 13 and 36 are connected to a conventional heat pump. Each of the wavy copper tubes 26, 27 may be made from 6mm (1/4") outer diameter soft copper tubing dimensioned typically as shown in Fig. 2. For certain applications it may be desirable to use other size tubes, such as 3mm (1/8'), 9mm(3/8") and other sizes depending on the capacity of the system.

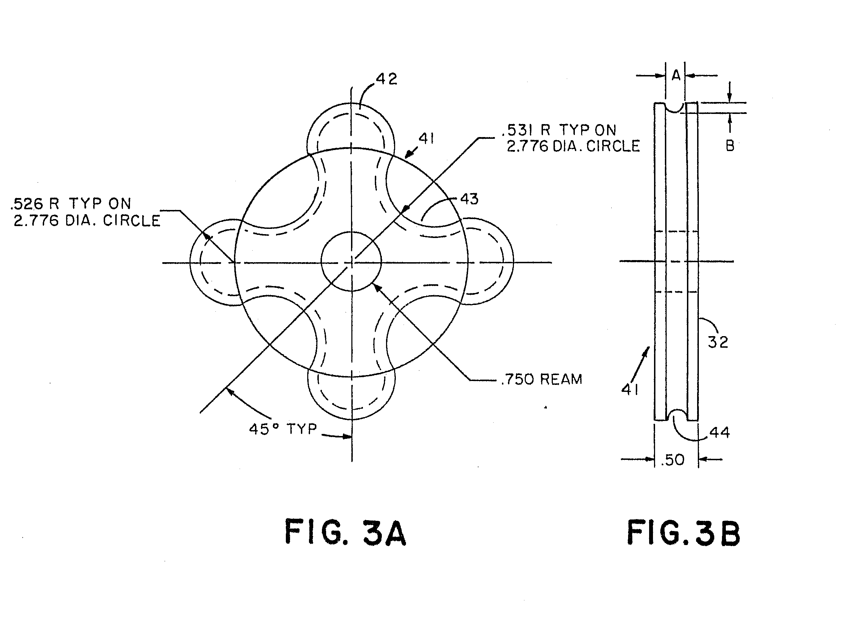

Referring to Figs. 3A to 3B, there are shown plan and end views, respectively, of a suitable gear for coacting with a like meshing gear for forming the wavy copper tubing. Gear 32 typically comprises four teeth 42 in space quadrature of convex arcuate profile separated by concave segments 43 also of arcuate profile and which are opposed by a convex tooth of the mating gear in use. Groove 44 is typically of approx. 6mm width (0.25") and depth 3mm (0.122") for 6mm (1/4") tubing and 8mm (0.312") and 4mm (0.153") respectively for 8mm (5/16") tubing. The depths are .076mm (0.003") less than the tube radius to provide squeeze.

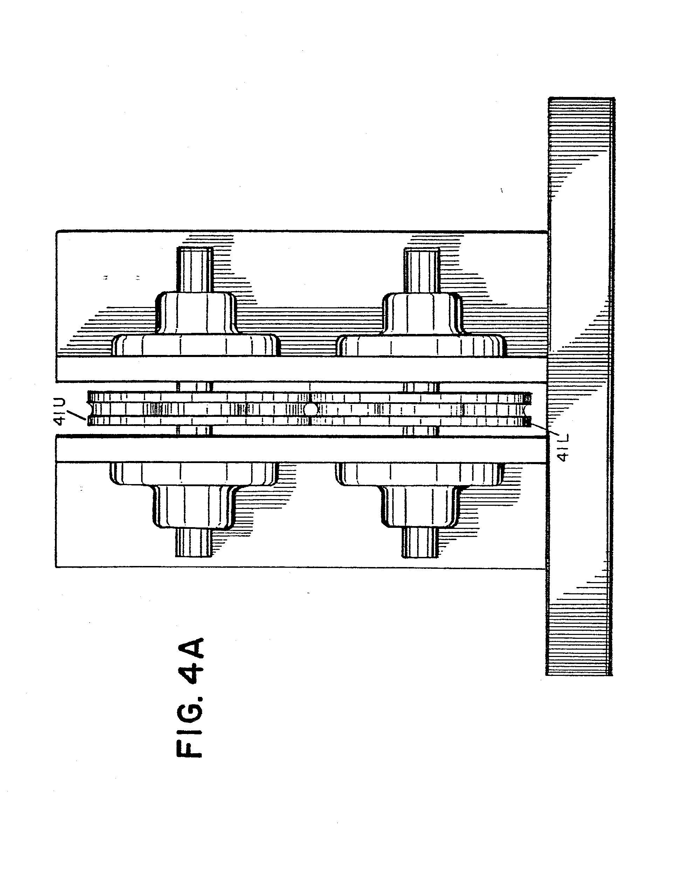

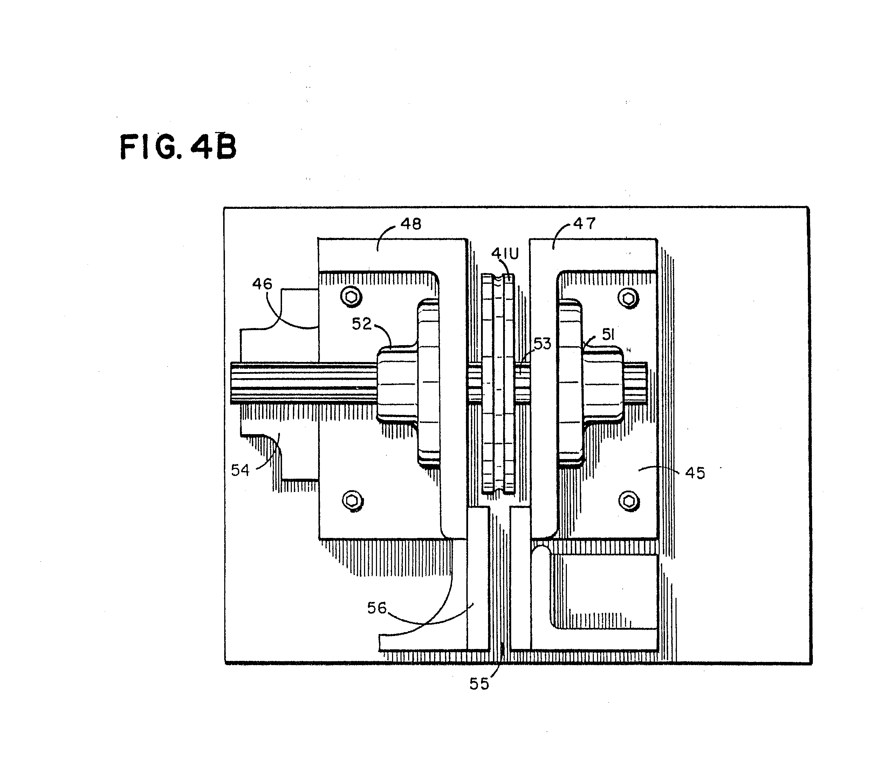

Referring to Figs. 4A and 4B, there are shown top and front views, respectively, of an embodiment of a machine for making wavy tubes according to the invention. Opposed base plates 45 and 46 may be fastened to a suitable work bench and are formed with upstanding L-shaped plates 47 and 48, respectively, carrying hubs 51 and 52, respectively, for supporting upper shaft 53 on which an upper gear 41U is mounted. A similar assembly is supported immediately below. A drive gear 54 is seated on the end of shaft 53 and meshes with a mating gear below so that the upper and lower gears are driven together. Opposed guide plates 55 and 56 guide straight copper tubing between upper gear 41U and lower gear 41L. A length of tubing may then be forced in the region between upper gear 41U and lower gear 41L as these gears are driven in synchronism to produce wavy tubes of the type shown in Figs 1 and 2. This apparatus can produce a 6mm (20 foot) length of 6mm (1/4") round wavy tubing in approximately a minute.

The use of wavy tubes has a number of advantages. Increased heat transfer outside the tube occurs because there are numerous eddies produced in the cross flow as the water flows axially over the waves in the tubes. There is also increased heat transfer inside the tube because of the secondary flow induced by the repeated reverse bends as the Freon flows along the inside of the wavy tube. Making the wavy tube peak-to-peak amplitude of the order of a wavelength not only facilitates heat exchange but also ease of manufacture. The wavelength may preferably be of the order of 5 to 15 times the tube diameter, and typically 9 times the tube outer diameter. Furthermore, the cost for a 12m (40 foot) wavy tube heat exchanger is approximately a quarter the cost of the enhanced area tubing for a straight tube heat exchanger of the type described above in connection with the prior invention. The invention thus achieves efficient heat transfer at less cost.

CLAIMS

1. A heat exchanging system having an inlet (13) and an outlet (36) for connection to a heat pump and a conduit (24) surrounding a conducting tube (22) for carrying refrigerant inside the conduit (24) and returning it through thermally conducting tubing (26,27) in the region between the conducting tube (22) and the conduit (24), characterized in that the thermally conducting tubing (26,27) has a wavy shape.

2. A system in accordance with claim 1, wherein the thermally conducting tubing (26,27) has waves characterized by a wavelength that is greater than the diameter of the conducting tubing (26,27) and less than the diameter of the conduit (24) for creating eddies in thermally conducting fluid moving in an axial direction within the conduit (24) to enhance heat transfer between the thermally conducting fluid and the conducting tubing (26,27) and for creating eddies in refrigerant inside the conducting tubing (26,27) to enhance the heat transfer between the refrigerant and the conducting tubing (26,27).

3. A system in accordance with claim 1 or claim 2, wherein the length of the thermally conducting tubing (26,27) is much greater than the diameter of the conduit (24).

4. A system in accordance with claim 2 or claim 3, wherein the waves are characterized by a peak-to-peak amplitude that is greater than the diameter of the thermally conducting tubing (26,27) and less than the diameter of the conduit (24).

5. Apparatus for making thermally conducting wavy tubing comprising first and second opposed meshing gears (41L & 41U) characterized by convex points (42) alternating with concave recesses (43) with the radius of curvature of each convex point (42) being slightly less than the radius of curvature of each concave recess (43).

6. Apparatus in accordance with claim 5, wherein each gear has four teeth in space quadrature.

7. A method of making thermally conducting wavy tubing which includes the steps of forcing a length of copper tubing between two opposed meshing gears (41L & 41U) as the gears rotate in synchronism.

8. Thermally conducting tubing (26,27) for carrying a refrigerant, the conducting tubing being formed of a sequence of waves along its length with the wavelength and amplitude of each wave greater than the diameter of the tubing, for creating eddies in refrigerant moving inside the conducting tubing to enhance the heat transfer between the refrigerant and the conducting tubing.

9. Tubing in accordance with claim 8, wherein the wave amplitude is less than the wavelength.

10. Tubing in accordance with claim 8, wherein the wave amplitude is substantially equal to the wavelength.

11. Tubing in accordance with any of claims 8 to 10, further comprising refrigerant inside said conducting tubing.

12. A heat exchanging system including thermally conducting tubing according to any of claims 7 to 11.

13. A system according to any of claims 1 to 4, also having thermally conductive fluid inside the conduit (24) for exchanging heat with the wavy thermally conducting tubing (26,27).

14. A system according to claim 13, also having means for circulating the thermally conductive fluid in a direction along the length of the conduit (24) for coacting with the wavy conducting tubing (26,27) to create eddies in the thermally conductive fluid to enhance the heat transfer between the thermally conducting fluid and the wavy thermally conducting tubing (26,27).

FIG. 1

FIG. 2

.531 R TYP ON
2.776 DIA. CIRCLE

.526 R TYP ON
2.776 DIA. CIRCLE

.750 REAM

45° TYP

**FIG. 3A**

**FIG. 3B**

0123498

FIG. 4A

# FIG. 4B